# FASCICULE DE BREVET EUROPEEN

(11) **EP 3 350 067 B1**
(45) Date de publication et mention de la délivrance du brevet: **11.09.2019**
(21) Numéro de dépôt: 16774537.1
(22) Date de dépôt: 14.09.2016
(51) Int. Cl.: B62D 35/00, B62D 37/02, B60S 1/58

(54) **BECQUET POUR VÉHICULE AUTOMOBILE AVEC DISPOSITIF DE NETTOYAGE DE LUNETTE ARRIÈRE**
KRAFTFAHRZEUGSPOILER MIT REINIGUNGSVORRICHTUNG FÜR HECKSCHEIBE
MOTOR VEHICLE SPOILER WITH REAR SCREEN CLEANING DEVICE

(30) Priorité: 14.09.2015 FR 1558528
(43) Date de publication de la demande: 25.07.2018
(73) Titulaire: Compagnie Plastic Omnium, 69007 Lyon (FR)
(72) Inventeur: ESCOFFIER, Arnaud, 69009 Lyon (FR); HACHE, Bertrand, Bloomfield Hills, Michigan 48302 (US); COUDRON, Philippe, 69300 Caluire et Cuire (FR); DEPARDON, Pascal, 01800 Meximieux (FR); BARBIER, Pascal, 01100 Oyonnax (FR)
(74) Mandataire: LLR
(86) Numéro de dépôt international: PCT/FR2016/052318
(87) Numéro de publication internationale: WO 2017/046518

(56) Documents cités:
- EP-A2- 2 711 254
- FR-A3- 2 890 638
- JP-U- S61 175 071
- US-A- 4 603 898

## Description

La présente invention concerne le domaine de l'automobile, et plus particulièrement le domaine des becquets de véhicule automobile du type comportant un dispositif de nettoyage de lunette arrière.

On appelle becquet (ou spoiler en anglais) une pièce de carrosserie formant une extension du toit positionné sur l'arrière d'un véhicule, et destinée à améliorer l'aérodynamique (à l'arrière) du véhicule sur laquelle cette pièce est placée. Les becquets sont également utilisés pour des aspects esthétiques (style) du véhicule. Ils sont situés et fixés en partie haute et arrière du véhicule entre le toit et le bord supérieur de la lunette, sur le toit ou sur le hayon.

Certains becquets constituent également des dispositifs de nettoyage de la lunette arrière.

Classiquement, la pluie et la saleté sont généralement retirées de la lunette arrière à l'aide d'essuie-glaces et de lave-glace arrières. Malheureusement, les essuie-glaces et lave-glace arrière ont tendance à être fragiles, coûteux et sont sujets à des dommages. Ils sont de plus beaucoup moins utilisés que ceux situés à l'avant pour le pare-brise.

C'est pourquoi, certains becquets sont adaptés à diriger une partie de l'air circulant de l'avant vers l'arrière du véhicule le long de la surface supérieure du panneau de toit, directement au-dessus de la lunette arrière. En conséquence, la saleté (pluie, boue, poussière...) est soufflée de la lunette arrière.

On connaît un becquet mobile disposé dans une région d'un bord arrière de toit au-dessus d'une lunette arrière. Ce becquet est mobile en ce que l'angle du becquet avec le toit est modifié en fonction des conditions météorologiques. Ainsi, lorsqu'il pleut, le becquet est incliné de façon à former un pan incliné dont la partie relevée est du côté amont de l'écoulement. Ce pan incliné s'oppose ainsi à l'écoulement d'air et l'oriente au-dessus de la lunette, via un espacement ménagé entre le becquet et la lunette.

Ainsi, l'air circulant de l'avant vers l'arrière du véhicule est bloqué contre la paroi du becquet avant d'être dirigé dans une direction sensiblement opposée.

Ce type de becquet offre donc une solution très pénalisante pour l'efficacité aérodynamique globale du véhicule.

On connait également, par exemple du document EP2711254A2 un becquet fixe par rapport au véhicule, mais comportant un volet mobile. Le volet mobile est en saillie par rapport à la face supérieure du becquet, et le taux de saillie (hauteur de dépassement) augmente lorsque la vitesse du véhicule diminue afin de nettoyer la vitre arrière. A l'inverse, le taux de saillie diminue lorsque la vitesse augmente pour limiter les inconvénients aérodynamiques.

Ce type de becquet, même s'il améliore l'efficacité aérodynamique par rapport au becquet entièrement mobile, offre tout de même une solution désavantageuse en termes d'efficacité aérodynamique. D'autant plus que le volet mobile, sous pression constante, doit être renforcé et donc alourdi pour tenir de telles contraintes aérodynamiques.

Ainsi, les systèmes connus pour nettoyer la lunette arrière, comportent un organe en saillie de la surface de prolongement du toit, permettant de capter l'air circulant le long du toit et de le rediriger au-dessus de la lunette arrière. Cependant, ces organes ont un effet négatif sur l'aérodynamisme du véhicule, en particulier à grande vitesse.

On connaît également des systèmes s'affranchissant d'éléments mobiles. Ces dispositifs comportent une ouverture permanente, traversante (dans l'épaisseur en Z du becquet) et débouchant au-dessus de la lunette arrière, cette ouverture étant adaptée à laisser passer (passivement) une partie de l'écoulement d'air provenant du toit vers la lunette, à travers l'ouverture. On appelle « ouverture » un canal comportant une entrée et une sortie dans l'épaisseur (en Z) du becquet. Ainsi, l'air provenant du toit entre passivement dans l'entrée du canal, puis s'écoule dans le canal, et enfin, sort du canal au niveau de sa sortie, face à la lunette arrière.

Cependant une telle ouverture peut avoir un effet négatif sur l'aérodynamisme du véhicule, notamment à grande vitesse, où l'aérodynamique est optimale sans dérivation d'air, car il est souvent nécessaire de diriger tout l'air provenant du toit vers l'arrière du véhicule. De plus, la déviation de la trajectoire de l'air causée par l'ouverture, engendre des bruits à certaines vitesses. Ces perturbations phoniques peuvent entrainer des gênes pour le conducteur et ses passagers, mais également pour des personnes situées à l'extérieur du véhicule. De tels bruits pouvant en effet causer des nuisances sonores au niveau des habitations situées proche des voies à grande vitesse.

L'invention a pour but de remédier à ces inconvénients en proposant un becquet adapté à faire passer, dans certaines conditions de vitesse ou de météorologie, une partie de l'air circulant de l'avant vers l'arrière du véhicule le long de la surface supérieure du panneau de toit, directement au-dessus de la lunette arrière, tout en permettant dans certaines d'autres conditions de roulage, d'améliorer les performances phoniques et aérodynamiques de la voiture. L'invention y parvient en munissant le becquet d'une ouverture munie d'une paroi mobile permettant de refermer l'ouverture et s'ouvrant vers le bas afin de diriger passivement l'air provenant du toit au-dessus de la lunette arrière.

Ainsi, l'objet de l'invention concerne un becquet pour véhicule automobile destiné à être disposé dans une région d'un bord arrière de toit au-dessus d'une lunette arrière, ledit becquet comportant une face supérieure sensiblement alignée avec un prolongement imaginaire d'une ligne d'écoulement d'air du toit, et au moins une ouverture traversante et débouchant au-dessus d'une région de la lunette arrière, ladite ouverture étant munie d'au moins une paroi interne adaptée à canaliser un écoulement d'air provenant du toit au-dessus de la région à travers l'ouverture. Selon l'invention, la paroi est montée mobile par rapport au becquet, de façon à pouvoir s'ouvrir vers la lunette arrière pour canaliser l'écoulement d'air au-dessus de la région, et de façon à pouvoir obturer l'ouverture dans une position de fermeture.

De façon avantageuse, la paroi mobile peut être configurée pour obturer l'ouverture de façon à ce qu'une face supérieure de la paroi mobile soit affleurante avec la surface supérieure du becquet.

Selon l'invention, le becquet peut comporter un moyen d'actionnement apte à mettre en mouvement la paroi mobile, le moyen d'actionnement étant situé sous la face supérieure du becquet.

La paroi mobile est de préférence montée mobile en rotation autour d'un axe orienté transversalement par rapport au véhicule lorsque le becquet est monté sur le véhicule. Dans ce cas, le moyen d'actionnement et l'axe de rotation sont avantageusement situés sous la face supérieure du becquet.

Avantageusement, l'axe de rotation peut être situé en amont de l'ouverture, de façon à permettre un pivotement de la paroi mobile venant ouvrir ou fermer l'ouverture, sans que la paroi mobile soit en saillie de la face supérieur du becquet. Ainsi, la paroi mobile peut être apte à pivoter autour de l'axe selon au moins deux positions :
- une position d'ouverture, dans laquelle la paroi mobile est orientée en direction de la lunette, avec une orientation permettant d'envoyer l'air passant dans l'ouverture au-dessus de la région de la lunette arrière ;
- une position de fermeture, dans laquelle la paroi mobile ferme l'ouverture en étant sensiblement alignée avec un prolongement imaginaire de la ligne d'écoulement du toit, et tout en étant affleurante à la face supérieure du becquet.

La paroi mobile peut également comporter une position surélevée par rapport à la position de fermeture, dans laquelle la paroi mobile forme un plan incliné en saillie de la face supérieure du becquet, une partie avale de la paroi étant plus haute qu'une partie amont.

De préférence, la région correspond à la région de vision arrière du véhicule.

Le becquet selon l'invention peut comporter plusieurs ouvertures, et il peut comporter une peau de style fournissant une apparence externe au becquet, et un élément de renforcement de la peau de style fixé à la peau de style, l'élément de renforcement étant adapté à former un corps creux une fois rapporté sur le véhicule et dans lequel est logé le moyen d'actionnement.

Enfin, selon l'invention, la peau de style et/ou l'élément de renforcement est de préférence en matière thermoplastique.

L'invention sera mieux comprise à la lecture des figures annexées, qui sont fournies à titre d'exemples et ne présentent aucun caractère limitatif, dans lesquelles :
- La figure 1 illustre un exemple de becquet selon l'invention ;
- La figure 2 est un schéma d'une section (en YO) d'un becquet selon l'invention sans paroi mobile ;
- La figure 3 est un schéma d'une section (en Y0) d'un becquet selon l'invention avec sa paroi mobile et son moyen d'actionnement ;
- Les figures 4A à 4C illustrent les différentes positions de la paroi mobile d'un becquet selon l'invention

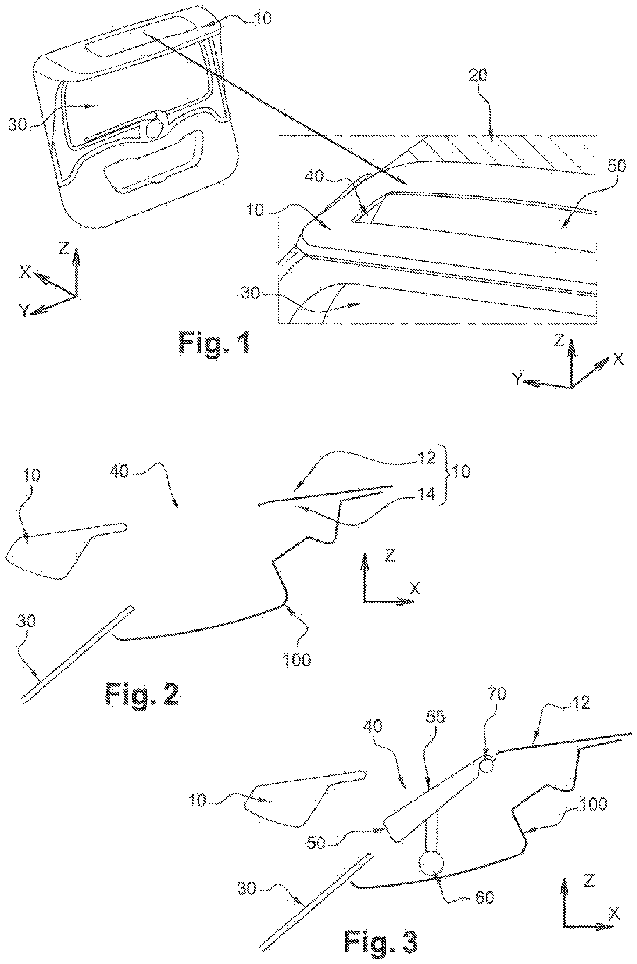

On se réfère maintenant aux figures 1 et 2, qui illustrent un exemple de réalisation d'un becquet 10 selon l'invention.

Le becquet 10 pour véhicule automobile selon l'invention est destiné à être disposé dans une région d'un bord arrière de toit 20 au-dessus d'une lunette arrière 30. Le becquet peut ainsi être fixé sur le toit, ou embarqué sur le hayon.

Le becquet 10 comporte une face supérieure 12 et une face inférieure 14 (voir figure 2). La face supérieure 12 est de préférence sensiblement alignée avec un prolongement imaginaire de la ligne d'écoulement du toit, pour des raisons aérodynamiques et/ou pour des raisons de style.

Le becquet 10 comporte une partie amont, destinée à être fixé sur le véhicule, et une partie aval formant une saillie au-dessus de la lunette arrière 30. Les notions de position amont et aval se réfèrent à l'écoulement de l'air sur la face supérieure du becquet, lorsque le véhicule avance.

Le becquet 10 comporte au moins une ouverture 40 traversante, c'est-à-dire reliant les faces supérieure 12 et inférieure 14. On appelle « ouverture » un canal comportant une entrée et une sortie dans l'épaisseur (en Z) du becquet. Ainsi, l'air provenant du toit entre passivement dans l'entrée du canal, puis s'écoule dans le canal, et enfin, sort du canal au niveau de sa sortie, face à la lunette arrière. Le canal comporte ainsi des parois, dites parois internes.

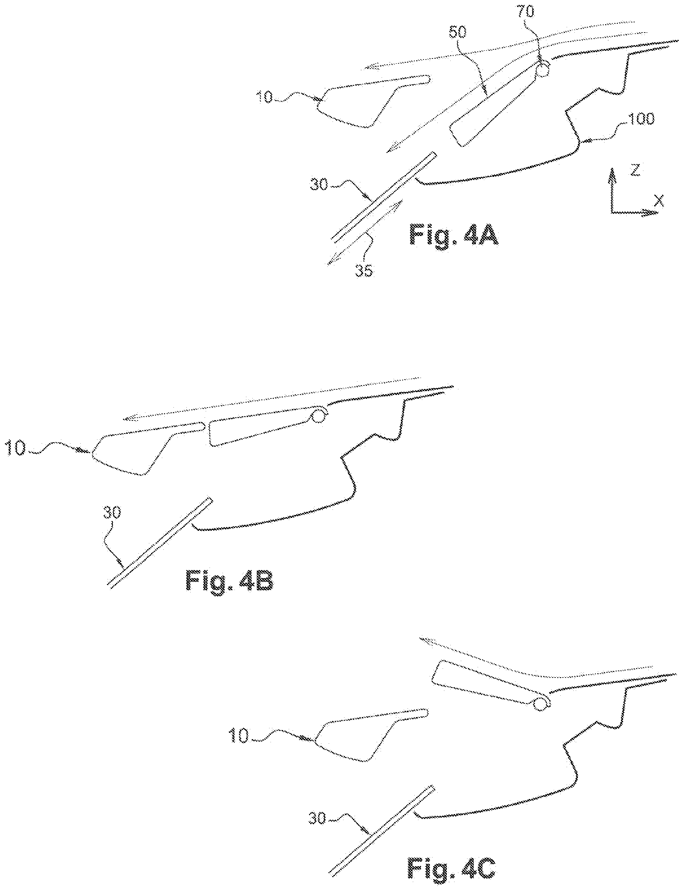

L'ouverture 40 est positionnée de façon à déboucher au-dessus d'une région de la lunette arrière 30, c'est-à-dire qu'une partie de l'air issu du toit 20, et entrant dans cette ouverture 40, ressort au-dessus d'une région 35 de la lunette (voir figure 4A). De façon préférée, cette région 35 correspond sensiblement à la région de vision arrière du véhicule qui doit donc être celle à nettoyer. On appelle vision arrière le champ de vision du conducteur lorsqu'il regarde vers l'arrière de véhicule à travers la lunette arrière 30.

L'ouverture 40 comporte des parois internes adaptées à canaliser (diriger passivement) l'air entrant dans l'ouverture 40 au-dessus de la région 35 de la lunette de façon à nettoyer cette dernière, notamment en faisant passer un flux d'air pour chasser l'eau ou d'autres pollutions à la surface de la lunette 30. L'air dévié du flux principal passe ainsi sur la lunette arrière 30 au moins dans la région 35 de vision arrière du véhicule. En conséquence, la saleté (pluie, boue, poussière, feuilles, neige...) est soufflée de la lunette arrière.

Selon l'invention, au moins l'une de ses parois est montée mobile par rapport au becquet 10, de façon à pouvoir s'ouvrir vers le bas, c'est-à-dire vers la lunette arrière 30, pour canaliser l'écoulement d'air au-dessus de la région 35, et de façon à pouvoir obturer l'ouverture 40 dans une position de fermeture.

De façon avantageuse, cette paroi mobile 50 est configurée pour obturer l'ouverture 40 de façon à ce que la face supérieure 55 (voir figure 3) de cette paroi mobile soit affleurante (ni en saillie ni en dépression) avec la surface supérieure 12 du becquet 10.

De façon avantageuse, en position de fermeture, la paroi mobile 50 est sensiblement alignée avec un prolongement imaginaire de la ligne d'écoulement du toit. Cette configuration procure un avantage esthétique du fait d'un masquage de l'ouverture 40, et donc, d'une sensation de continuité du toit. De plus, cette configuration permet d'éviter que la pluie ou les saletés n'atteignent facilement la lunette arrière, contrairement aux solutions de l'art antérieur.

La paroi mobile 50 est mise en mouvement par un moyen d'actionnement 60. De préférence, le moyen d'actionnement 60 est situé sous la face supérieure 12 du becquet 10.

Ainsi, le moyen d'actionnement 60 n'est pas en saillie par rapport à la face supérieure 12, de façon à ne pas perturber l'écoulement d'air provenant du toit puis glissant sur la face supérieure 12 du becquet 10.

La figure 1 illustre un exemple de réalisation, dans lequel le becquet 10 est un becquet, de toit ou de hayon, pour véhicule automobile. Le becquet 10 comporte selon cet exemple une seule ouverture 40 s'étendant sur sensiblement toute la largeur du becquet 10. La largeur du becquet est la dimension prise dans l'axe Y du véhicule, c'est-à-dire dans la largeur du véhicule.

Selon cet exemple, la paroi mobile 50 est montée en rotation autour d'un axe 70 orienté transversalement par rapport au véhicule (voir figures 3 et 4A à 4C).

Comme l'illustrent les figures 4A et 4B, sur lesquelles le flux d'air est indiqué par des flèches, la paroi mobile 50 a ainsi au moins deux positions :
- une position d'ouverture (figure 4A), dans laquelle elle est orientée en direction de la lunette, avec une orientation permettant d'envoyer l'air passant dans l'ouverture 40 au-dessus de la région 35 de la lunette arrière 30 ;
- une position de fermeture (figure 4B), dans laquelle elle est orientée sensiblement parallèlement à la face supérieure 55 du becquet, tout en étant affleurante à cette même surface. Dans cette position de fermeture la paroi mobile empêche l'air de passer dans l'ouverture, sans modifier l'écoulement d'air provenant du toit puis glissant sur la face supérieure 12 du becquet 10.

De préférence, l'axe 70 est situé vers la partie amont du becquet 10, c'est-à-dire vers l'avant du véhicule lorsque le becquet 10 est monté sur le véhicule. De préférence l'axe 70 est situé dans la première moitié (selon l'axe X du véhicule) du becquet 10. L'axe de rotation 70 est donc situé en amont de l'ouverture 40, de façon à permettre un pivotement vers le bas de la paroi mobile 50 venant ouvrir ou fermer l'ouverture 40, sans qu'aucune partie de la paroi mobile ne soit en saillie de la face supérieur 12 du becquet 10.

La paroi mobile 50 est mise en mouvement par un moyen d'actionnement 60. Ce moyen d'actionnement 60 permet de faire pivoter la paroi mobile 50 autour de l'axe de rotation 70 sur lequel est montée la paroi mobile 50.

De préférence, le moyen d'actionnement 60 et l'axe de rotation sont situés sous la face supérieure 12 du becquet 10. Ainsi, ni le moyen d'actionnement 60, ni l'axe de rotation 70, ni la paroi mobile 50, même en position de fermeture, n'est en saillie par rapport à la face supérieure 12, de façon à ne pas perturber l'écoulement d'air provenant du toit et glissant sur la face supérieure 12 du becquet 10. Les performances aérodynamiques et phoniques du becquet 10 sont donc parfaitement préservées dans cette position de fermeture.

Selon un mode de réalisation, le becquet 10 comporte plusieurs ouvertures 40. Selon ce mode de réalisation, les ouvertures sont de préférence alignées sur un axe transversal du véhicule. Les parois de chaque ouverture coopèrent pour contribuer ensemble à diriger l'air provenant du toit vers la région de la lunette arrière 30. De préférence, chaque ouverture 40 est munie d'une paroi mobile 50.

Selon un mode de réalisation (figure 4C), la paroi mobile 50 comporte aussi une position surélevée par rapport à la position de fermeture alignée. Dans cette configuration, l'axe 70 est avantageusement situé en amont de l'ouverture 40. Sur la figure 4C, le flux d'air est indiqué par une flèche.

La paroi mobile 50 forme alors une paroi en saillie de la face supérieure 12 du becquet 10. Cette paroi en saillie forme un plan incliné, la partie avale de la paroi étant plus haute que la partie amont (contrairement à la position d'ouverture (abaissée) de la paroi). La paroi oriente alors vers le haut le flux d'air s'écoulant le long du toit du véhicule, afin d'augmenter l'appui aérodynamique.

Ainsi, en condition de pluie, le moyen d'actionnement 60 oriente la paroi mobile en position d'ouverture, de façon à créer l'ouverture 40 traversante, et de façon à laisser passer une partie de l'air venant du toit vers une région de la lunette arrière 30 à nettoyer, pour chasser l'eau de pluie, la poussière, la neige et autres pollutions, hors de la lunette 30.

En condition sèche (sans eau sur la lunette arrière), et à faible vitesse (inférieure à 100 km/h) le moyen d'actionnement 60 oriente la paroi mobile en position de fermeture, de façon à fermer l'ouverture 40 pour éviter des perturbations phoniques et aérodynamiques.

En condition sèche (sans eau sur la lunette arrière), et à forte vitesse (supérieure à 100 km/h) le moyen d'actionnement 60 oriente la paroi mobile en position surélevée, de façon à orienter la paroi mobile 50 selon un plan incliné vers le haut, afin d'augmenter l'appui aérodynamique.

Selon un mode de réalisation non représenté, le becquet 10 de véhicule automobile, s'étend latéralement par rapport à la carrosserie de véhicule, sur la largeur du véhicule, et il comporte :
- une peau de style fournissant une apparence externe au becquet, et s'étendant en saillie vers l'arrière du véhicule; et
- un élément de renforcement (partie du toit ou du hayon) de la peau de style fixé à la peau de style, comportant des moyens de fixation au toit ou au hayon 100.

Un logement formant caisson est ménagé entre l'élément de renforcement et le becquet 10, lorsque le becquet 10 est monté sur le véhicule. Ce logement peut accueillir un équipement technique, et notamment, de façon préférentielle, le moyen d'actionnement 60.

La peau de style est de préférence en matière thermoplastique. L'élément de renforcement peut être en matière thermodurcissable ou en matière thermoplastique.

## Revendications

1. Becquet (10) pour véhicule automobile destiné à être disposé dans une région d'un bord arrière de toit (20) au-dessus d'une lunette arrière (30), ledit becquet (10) comportant une face supérieure (12) sensiblement alignée avec un prolongement imaginaire d'une ligne d'écoulement d'air du toit (20), et au moins une ouverture (40) traversante et débouchant au-dessus d'une région (35) de la lunette arrière (30), ladite ouverture (40) étant munie d'au moins une paroi (50) interne adaptée à canaliser un écoulement d'air provenant du toit au-dessus de la région (35) à travers l'ouverture (40), **caractérisé en ce que** ladite paroi (50) est montée mobile par rapport au becquet (10), de façon à pouvoir s'ouvrir vers la lunette arrière (30) pour canaliser l'écoulement d'air au-dessus de la région (35), et de façon à pouvoir obturer l'ouverture (40) dans une position de fermeture.

2. Becquet (10) selon la revendication 1, dans lequel la paroi mobile (50) est configurée pour obturer l'ouverture (40) de façon à ce qu'une face supérieure (55) de la paroi mobile (50) soit affleurante avec la surface supérieure (12) du becquet (10).

3. Becquet (10) selon l'une des revendications précédentes, comportant un moyen d'actionnement (60) apte à mettre en mouvement la paroi mobile (50), ledit moyen d'actionnement (60) étant situé sous la face supérieure (12) du becquet (10).

4. Becquet (10) selon l'une des revendications précédentes, dans lequel la paroi mobile (50) est montée mobile en rotation autour d'un axe (70) orienté transversalement par rapport au véhicule lorsque le becquet (10) est monté sur le véhicule.

5. Becquet (10) selon la revendication 4, dans lequel le moyen d'actionnement (60) et l'axe de rotation (70) sont situés sous la face supérieure (12) du becquet (10).

6. Becquet (10) selon l'une des revendications 4 et 5, dans lequel l'axe de rotation (70) est situé en amont de l'ouverture (40), de façon à permettre un pivotement de la paroi mobile (50) venant ouvrir ou fermer l'ouverture (40), sans que la paroi mobile (50) soit en saillie de la face supérieur (12) du becquet (10).

7. Becquet (10) selon la revendication 6, dans lequel la paroi mobile (50) est apte à pivoter autour de l'axe (70) selon au moins deux positions :
- une position d'ouverture, dans laquelle la paroi mobile (50) est orientée en direction de la lunette, avec une orientation permettant d'envoyer l'air passant dans l'ouverture (40) au-dessus de la région (35) de la lunette arrière (30) ;
- une position de fermeture, dans laquelle la paroi mobile (50) ferme l'ouverture (40) en étant sensiblement alignée avec un prolongement imaginaire de la ligne d'écoulement du toit, et tout en étant affleurante à la face supérieure (12) du becquet (10).

8. Becquet (10) selon la revendication 7, dans lequel la paroi mobile (50) comporte une position surélevée par rapport à la position de fermeture, dans laquelle la paroi mobile (50) forme un plan incliné en saillie de la face supérieure (12) du becquet (10), une partie avale de la paroi (50) étant plus haute qu'une partie amont.

9. Becquet (10) selon l'une des revendications précédentes, dans lequel la région (35) correspond à la région de vision arrière du véhicule.

10. Becquet (10) selon l'une des revendications précédentes, comportant plusieurs ouvertures (40).

11. Becquet (10) selon l'une des revendications précédentes, comportant une peau de style fournissant une apparence externe au becquet, et un élément de renforcement de la peau de style fixé à la peau de style, l'élément de renforcement étant adapté à former un corps creux une fois rapporté sur le véhicule et dans lequel est logé le moyen d'actionnement (60).

12. Becquet selon la revendication 11, dans lequel la peau de style est en matière thermoplastique et/ou l'élément de renforcement est en matière thermoplastique.

## Patentansprüche

1. Spoiler (10) für Kraftfahrzeug, der dazu bestimmt ist, in einem Bereich eines hinteren Dachrandes (20) oberhalb eines Heckfensters (30) angeordnet zu werden, wobei der Spoiler (10) eine obere Fläche (12) aufweist, die im Wesentlichen in Flucht ist mit einer imaginären Verlängerung einer Luftstromlinie des Dachs (20), und mindestens eine Durchgangsöffnung (40), die oberhalb eines Bereichs (35) des Heckfensters (30) ausmündet, wobei die Öffnung (40) mit mindestens einer inneren Wand (50) versehen ist, die dazu eingerichtet ist, einen vom Dach stammenden Luftstrom oberhalb des Bereichs (35) durch die Öffnung (40) hindurch zu kanalisieren, **dadurch gekennzeichnet, dass** die Wand (50) relativ zu dem Spoiler (10) beweglich gelagert ist, so dass sie sich zu dem Heckfenster (30) hin öffnen kann, um den Luftstrom oberhalb des Bereichs (35) zu kanalisieren, und so dass sie die Öffnung (40) in einer Schließstellung verschließen kann.

2. Spoiler (10) nach Anspruch 1, wobei die bewegliche Wand (50) ausgebildet ist, um die Öffnung (40) so zu verschließen, dass eine obere Fläche (55) der beweglichen Wand (50) mit der oberen Fläche (12) des Spoilers (10) flächenbündig ist.

3. Spoiler (10) nach einem der vorhergehenden Ansprüche, aufweisend ein Bestätigungsmittel (60), das imstande ist, die bewegliche Wand (50) in Bewegung zu versetzen, wobei das Bestätigungsmittel (60) sich unter der oberen Fläche (12) des Spoilers (10) befindet.

4. Spoiler (10) nach einem der vorhergehenden Ansprüche, wobei die bewegliche Wand (50) um eine Achse (70) drehbeweglich gelagert ist, die relativ zu dem Fahrzeug quer ausgerichtet ist, wenn der Spoiler (10) an dem Fahrzeug gelagert ist.

5. Spoiler (10) nach Anspruch 4, wobei das Bestätigungsmittel (60) und die Drehachse (70) sich unter der oberen Fläche (12) des Spoilers (10) befinden.

6. Spoiler (10) nach einem der Ansprüche 4 und 5, wobei die Drehachse (70) sich stromaufwärts zu der Öffnung (40) befindet, so dass sie ein Schwenken der beweglichen Wand (50) gestattet, was die Öffnung (40) öffnet oder schließt, ohne, dass die bewegliche Wand (50) über die obere Fläche (12) des Spoilers (10) übersteht.

7. Spoiler (10) nach Anspruch 6, wobei die bewegliche Wand (50) imstande ist, um die Achse (70) gemäß mindestens zwei Stellungen zu schwenken
- eine Öffnungsstellung, in der die bewegliche Wand (50) in Richtung des Fensters ausgerichtet ist, mit einer Ausrichtung, die gestattet, die in die Öffnung (40) strömende Luft oberhalb des Bereichs (35) des Heckfensters (30) zu leiten,
- eine Schließstellung, in der die bewegliche Wand (50) die Öffnung schließt (40), in dem sie im Wesentlichen in Flucht ist mit der imaginären Verlängerung der Luftstromlinie des Dachs und indem sie gleichzeitig flächenbündig ist mit der oberen Fläche (12) des Spoilers (10).

8. Spoiler (10) nach Anspruch 7, wobei die bewegliche Wand (50) eine relativ zu der Schließstellung angehobene Stellung aufweist, in der die bewegliche Wand (50) eine geneigte Ebene bildet, die über die obere Fläche (12) des Spoilers (10) übersteht, wobei der stromabwärtige Teil der Wand (50) höher ist als der stromaufwärtige Teil.

9. Spoiler (10) nach einem der vorhergehenden Ansprüche, wobei der Bereich (35) dem hinteren Sichtbereich des Fahrzeugs entspricht.

10. Spoiler (10) nach einem der vorhergehenden Ansprüche, aufweisend mehrere Öffnungen (40).

11. Spoiler (10) nach einem der vorhergehenden Ansprüche, aufweisend eine Stilverkleidung, die dem Spoiler eine äußere Erscheinung verleiht, und ein Element zur Verstärkung der Stilverkleidung, das an der Stilverkleidung befestigt ist, wobei das Verstärkungselement dazu eingerichtet ist, einen Hohlkörper zu bilden, sobald es an dem Fahrzeug angebracht ist, und in dem das Betätigungsmittel (60) aufgenommen ist.

12. Spoiler nach Anspruch 11, wobei die Stilverkleidung aus thermoplastischem Material ist und/oder das Verstärkungselement aus thermoplastischem Material ist.

## Claims

1. Motor vehicle spoiler (10) intended to be arranged in a region of a rear roof edge (20) above a rear window (30), said spoiler (10) comprising an upper side (12) substantially aligned with an imaginary extension of an air flow line of the roof (20), and at least one opening (40) going from one side to the other and opening out above a region (35) of the rear window (30), said opening (40) being provided with at least one inner wall (50) adapted to channel an air flow from the roof above the region (35) through the opening (40), **characterised in that** said wall (50) is movably mounted relative to the spoiler (10), so as to be able to open towards the rear window (30) to channel the air flow above the region (35), and so as to be able to block the opening (40) in a closed position.

2. Spoiler (10) according to claim 1, wherein the movable wall (50) is configured to block the opening (40) so that an upper side (55) of the movable wall (50) is flush with the upper surface (12) of the spoiler (10).

3. Spoiler (10) according to one of the preceding claims, comprising an actuation means (60) adapted to move the movable wall (50), said actuation means (60) being located underneath the upper side (12) of the spoiler (10).

4. Spoiler (10) according to one of the preceding claims, wherein the movable wall (50) is movably mounted in rotation about an axis (70) oriented transversely relative to the vehicle when the spoiler (10) is mounted on the vehicle.

5. Spoiler (10) according to claim 4, wherein the actuation means (60) and the axis of rotation (70) are located underneath the upper side (12) of the spoiler (10).

6. Spoiler (10) according to claim 4 or 5, wherein the axis of rotation (70) is located upstream from the opening (40), so that the movable wall (50) can pivot in order to open or close the opening (40), without the movable wall (50) projecting from the upper side (12) of the spoiler (10).

7. Spoiler (10) according to claim 6, wherein the movable wall (50) is adapted to pivot about the axis (70) in at least two positions:
- an open position, wherein the movable wall (50) is oriented towards the window, with an orientation that sends the air passing through the opening (40) above the region (35) of the rear window (30),
- a closed position, wherein the movable wall (50) closes the opening (40) while being substantially aligned with an imaginary extension of the flow line of the roof and while being flush with the upper side (12) of the spoiler (10).

8. Spoiler (10) according to claim 7, wherein the movable wall (50) comprises a raised position relative to the closed position, wherein the movable wall (50) forms an inclined plane projecting from the upper side (12) of the spoiler (10), a downstream portion of the wall (50) being higher than an upstream portion.

9. Spoiler (10) according to one of the preceding claims, wherein the region (35) corresponds to the rear view region of the vehicle.

10. Spoiler (10) according to one of the preceding claims, comprising several openings (40).

11. Spoiler (10) according to one of the preceding claims, comprising a style skin providing an external appearance to the spoiler, and a reinforcement element for reinforcing the style skin attached to the style skin, the reinforcement element being adapted to form a hollow body once attached to the vehicle and in which the actuations means (60) is housed.

12. Spoiler according to claim 11, wherein the style skin is made of thermoplastic material and/or the reinforcement element is made of thermoplastic material.
